# EUROPÄISCHE PATENTANMELDUNG

(11) **EP 2 400 192 A2**
(43) Veröffentlichungstag der Anmeldung: **28.12.2011**
(21) Anmeldenummer: 11168059.1
(22) Anmeldetag: 30.05.2011
(51) Int. Cl.: F16K 24/04

(54) **Entlüftungsventil**

(30) Priorität: 23.06.2010 DE 102010030456
(71) Anmelder: Alfmeier Präzision AG Baugruppen und Systemlösungen, 91757 Treuchtlingen (DE)
(72) Erfinder: Müller, Matthias, 91757 Schambach (DE); Theißler, Jürgen, 91595 Burgoberbach (DE)
(74) Vertreter: Mörtel & Höfner

(57) **Zusammenfassung**

Die Erfindung betrifft ein Entlüftungsventil für den Kraftstofftank eines Kraftfahrzeugs, mit einem eine Entlüftungsöffnung (28) aufweisenden Gehäuse (2), einem im Gehäuse in Richtung von dessen Mittellängsachse (16) beweglich gelagerten Schwimmer (5) und ein am Schwimmer gehaltenes Dichtelement (29), welches an einer - in der Draufsicht in Richtung der Mittellängsachse (16) des Gehäuses (2) gesehen - außerhalb der Entlüftungsöffnung (28,28a) angeordneten Fixierstelle (35) am Schwimmer (5) fixiert ist. Die Entlüftungsöffnung (28,28a) weist eine von der Kreisform abweichende Öffnungskontur und einen sich von der Fixierstelle (35) weg erstreckenden Endabschnitt (39) auf, dessen lichte Breite (36) mit zunehmenden Abstand von der Fixierstelle (35) zunimmt, wobei die lichte Breite (36) quer zu einer gedachten Mittelebene (37) gemessen ist, welche die Fixierstelle (35) mittig schneidet und die Mittellängsachse (19) des Schwimmers (5) beinhaltet.

## Beschreibung

Die Erfindung betrifft ein Entlüftungsventil für den Kraftstofftank eines Kraftfahrzeugs, insbesondere eines solchen mit einem Ottomotor. Ein solches Ventil umfasst ein Gehäuse mit einer Entlüftungsöffnung, einen im Gehäuse in Richtung von dessen Mittellängsachse beweglich gelagerten Schwimmer und ein am Schwimmer gehaltenes Dichtelement. Ein solches Ventil soll eine Be- und Entlüftung des Tanks (im Folgenden wird vereinfachend nur von Belüftung gesprochen) vor allem während des Fahrzeugbetriebs gewährleisten. Durch den Schwimmer wird ein Austritt von Kraftstoff in die Umgebung verhindert. Wenn während des Fahrzeugbetriebs, etwa bei einer Kurvenfahrt, der Kraftstoff hochschwappt, wird der Schwimmer angehoben und in seine Schließstellung bewegt, in der er das Dichtelement an die Entlüftungsöffnung bzw. gegen einen diese umfassenden Dichtsitz drückt. Dabei baut sich häufig im Tankinnenraum ein Überdruck gegenüber der Atmosphäre auf, so dass das Dichtelement vom Tankinnenraum her mit einer Druckkraft beaufschlagt wird, die sich aus der Größe des Überdrucks und der Fläche der Entlüftungsöffnung ergibt. Diese Kraft wirkt der vom Schwimmer auf das Dichtelement ausgeübten Öffnungskraft entgegen, so dass das Dichtelement sich nur verzögert oder im Extremfall überhaupt nicht von der Entlüftungsöffnung löst.

Aufgabe der Erfindung ist es, ein Entlüftungsventil vorzuschlagen, welches ein Wiederöffnen schon bei relativ hohen Tankinnendrücken und einen schnellen Druckabbau im Tankinnenraum gewährleistet.

Diese Aufgabe wird bei einem Ventil der eingangs genannten Art dadurch gewährleistet, dass eine Entlüftungsöffnung vorgesehen ist, welche eine insgesamt von der Kreisform abweichende Öffnungskontur hat und einen sich von der Fixierstelle weg erstreckenden Endabschnitt aufweist, dessen lichte Breite mit zunehmenden Abstand von der Fixierstelle zunimmt. Die lichte Breite ist dabei quer zu einer gedachten Mittelebene gemessen, welche die Fixierstelle mittig schneidet und welche die Mittellängsachse des Schwimmers beinhaltet. Dadurch, dass der seitlich verengte Endabschnitt der Entlüftungsöffnung eine kleine oder kleinere lichte Breiten aufweist als ein sich daran anschließender, weiter von der Fixierstelle entfernter Bereich, hat er eine entsprechend verringerte Fläche, so dass die bei gegebenem Tankinnendruck zum Öffnen, d.h. zum Abziehen des Dichtelements von dem Endabschnitt bzw. eines diesen umgrenzenden Dichtsitzes erforderliche Kraft geringer ist, als dies etwa bei einer kreisrunden Entlüftungsöffnung der Fall ist. Sobald sich das Dichtelement erst einmal von dem Endabschnitt zu lösen beginnt, kann Gas, worunter ein Kraftstoffdampf - Luftgemisch zu verstehen ist, aus dem Tankinnenraum unter Absenkung des Innendrucks nach außen strömen. Die Druckabsenkung wird nun aber dadurch erheblich beschleunigt, dass die lichte Weite der Entlüftungsöffnung mit zunehmenden Abstand zur Fixierstelle und dementsprechend der vom Dichtelement freigegebene Strömungsquerschnitt der Entlüftungsöffnung und der sie durchsetzende Gasstrom im Vergleich zu einer schlitzförmigen, eine gleichbleibende lichte Breite aufweisenden Entlüftungsöffnung wesentlich stärker zunimmt. Die Folge ist ein schnelles Wiederöffnen des Ventils und ein schneller Druckabbau im Tankinnenraum.

Bei einer weiteren bevorzugten Ausgestaltung weist das Entlüftungsventil eine Druckhaltefunktion auf. Diese wird allgemein durch eine von einem Schließkörper gesteuerten Entlüftungsöffnung gewährleistet, welcher schwerkraftbedingt eine in einer Gehäusequerwand vorhandene Entlüftungsöffnung verschließt. Der Schließkörper ist vielfach als Schließkugel ausgebildet, wobei eine ihn tragende Oberseite der Gehäusequerwand so gestaltet ist, dass die Schließkugel schwerkraftbedingt zur Entlüftungsöffnung rollt und diese verschließt. Wird nun Kraftstoff über einen an diesem vorhandenen Einfüllstutzen in den Tank nachgefüllt, setzt der Schließkörper dem aus dem Tank verdrängten Gas einen den Tankinnendruck erhöhenden Widerstand entgegen. Der erhöhte Druck im Tank bewirkt, dass gegen Ende des Betankungsvorgangs, d.h. wenn ein im oder am Tank vorhandenes Füllstandbegrenzungsventil auf Grund des auf eine bestimmte Höhe gestiegenen Kraftstoffpegels schließt, der Kraftstoff im Einfüllstutzen hochsteigt und das Abschalten der Zapfpistole auslöst.

Es werden nun zwei verschiedene Ausführungsvarianten zur Realisierung einer Druckhaltefunktion vorgeschlagen. Bei einer Ausführungsvariante ist eine von dem Verschlusskörper gesteuerte zweite Entlüftungsöffnung vorhanden, die mit der vom Schwimmer gesteuerten Entlüftungsöffnung fluidisch verbunden und ist an einer separaten Querwand des Ventilgehäuses angeordnet ist. Im Falle eines als Schließkugel ausgebildeten Schließkörpers ist die Oberseite der Querwand so gestaltet, dass die Schließkugel schwerkraftbedingt zur Entlüftungsöffnung, die eine kreisrunde Öffnungskontur aufweist, rollt und diese verschließt.

Bei einer zweiten bevorzugten Ausführungsvariante ist nur eine Entlüftungsöffnung vorhanden, die von der Oberseite einer sie tragenden Querwand her von einem Schließkörper verschlossen ist, wobei bei einer besonders bevorzugten Ausgestaltung die Entlüftungsöffnung unterschiedliche Öffnungskonturen aufweist. Die Öffnungskontur auf der dem Dichtelement zugewandten Seite der von der Entlüftungsöffnung durchsetzten Querwand ist so ausgestaltet wie oben beschrieben, wodurch ein schnelles Wiederöffnen der Entlüftungsöffnung gewährleistet ist. Die Öffnungskontur auf der anderen Seite, der Oberseite der Querwand, ist dagegen kreisrund, so dass sie von einer Schließkugel verschließbar ist. Im Gegensatz zur erstgenannten Ausführungsvariante sind somit keine zwei separaten Querwände erforderlich, wodurch der Herstellungs- und der Montageaufwand verringert sind. Ein Ventilgehäuse mit einer Querwand, die von einer vorzugsweise zwei unterschiedliche Öffnungskonturen aufweisenden Entlüftungsöffnung durchsetzt ist, lässt sich auf einfache Weise als Spritzgussteil herstellen. Dagegen wäre ein Gehäuse mit zwei axial beabstandeten, jeweils eine Öffnung tragenden Querwänden so nicht herstellbar, so dass eine der beiden Querwände als separates Teil an dem Ventilgehäuse angebracht werden müsste.

Vorzugsweise ist die Entlüftungsöffnung hinsichtlich der oben erwähnten gedachten Mittelebene spiegelsymmetrisch ausgestaltet. Dadurch ist gewährleistet, dass das Dichtelement auf beiden Seiten der Ebene vom Tankinnendruck mit der gleichen Kraft beaufschlagt ist und dementsprechend der sich von der Entlüftungsöffnung in Öffnungsrichtung weg bewegende Schwimmer gleichmäßig belastet und ein Verkippen gegenüber seiner Mittellängsachse verhindert ist. Eine ungleichmäßige Belastung des Schwimmers birgt die Gefahr in sich, dass er sich im Ventilgehäuse verklemmt.

Die Erfindung wird nun unter Bezugnahme auf die beigefügten Abbildungen näher erläutert. Es zeigen:
- Fig. 1: ein Entlüftungsventil in teilweise geschnittener perspektivischer Längsschmitt-Darstellung,

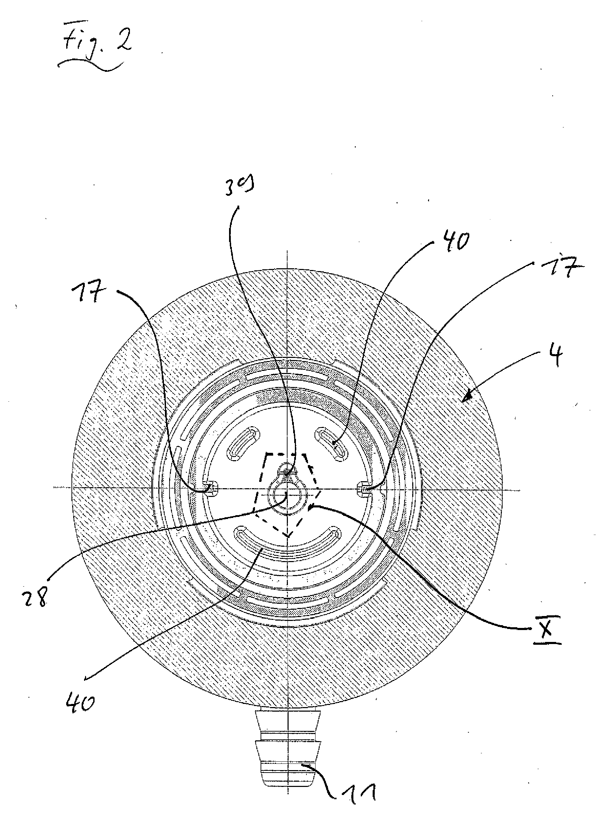

- Fig. 2: einen Querschnitt entsprechend Linie II-II in Fig. 1,

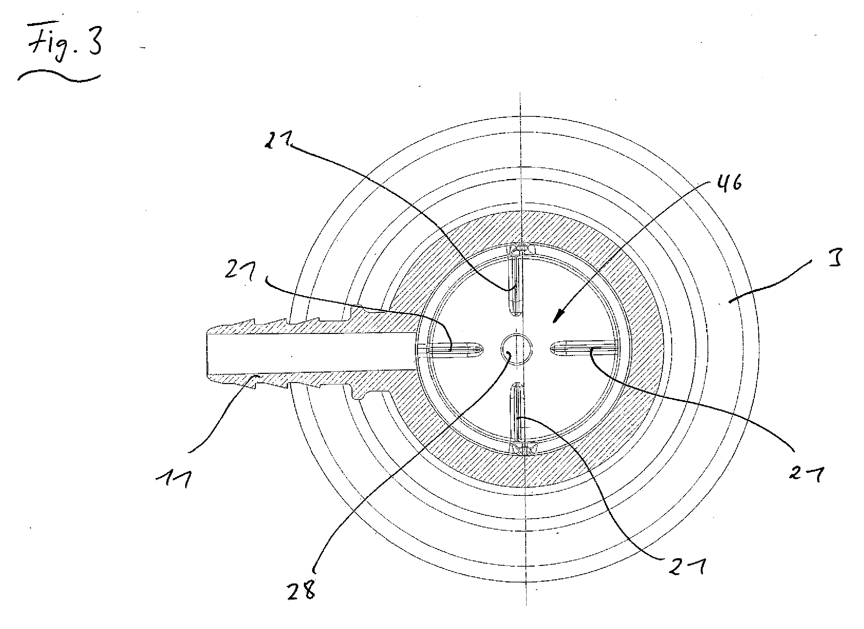

- Fig. 3: einen Querschnitt entsprechend Linie III-III in Fig. 1,
- Fig. 4: einen Mittellängsschnitt durch das Entlüftungsventil von Fig. 1,
- Fig. 5: den Ausschnitt V in Fig. 4,
- Fig. 6: bis 9 Längsschnittdarstellungen, welche den Öffnungsvorgang des Entlüftungsventils von Fig. 1 verdeutlichen,
- Fig. 10: eine Entlüftungsöffnung gemäß Ausschnitt X von Fig. 2,
- Fig. 11: und 12 alternativ gestaltete Entlüftungsöffnungen in einer Fig. 10 entsprechenden Darstellung,
- Fig. 13: den oberen Teil eines alternativ gestalteten Entlüftungsventils in schematischer Längsschnittdarstellung.

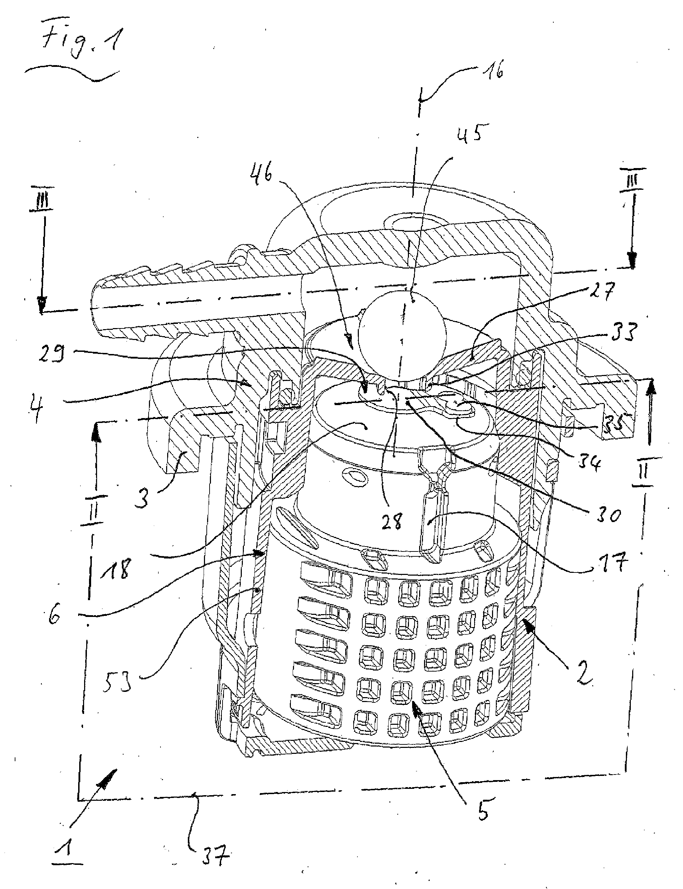

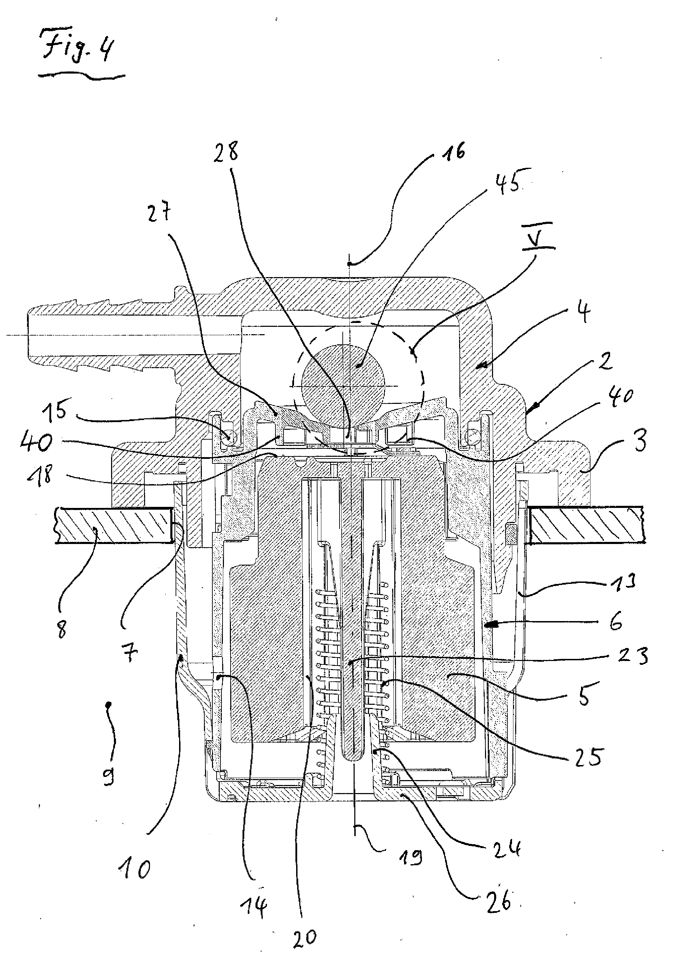

Ein Entlüftungsventil der erfindungsgemäßen Art umfasst, wie am besten Fig. 1 und Fig. 4 zu entnehmen ist, ein Gehäuse 2, das sich aus einem einen Flansch 3 und einen Anschlussstutzen 11 aufweisenden oberen Gehäuseteil 4 und einem einen Schwimmer 5 aufnehmenden unteren Gehäuseteil 6 zusammensetzt. Im Einbauzustand ragt der untere Gehäuseteil durch eine Öffnung 7 der oberen Wand 8 eines Kraftstofftanks in dessen Innenraum 9 hinein (Fig. 4). Der untere Gehäuseteil 6 ist von einer etwa zylinderförmigen, einen Schwappschutz bildenden und von Öffnungen 13 durchbrochenen Wand 10 mit Radialabstand umgeben. Der untere Gehäuseteil 6 ist ebenfalls von mehreren Öffnungen 14 durchbrochen, welche einen Austausch von Kraftstoff und Gas zwischen dem Tankinnenraum 9 und dem Innenraum des Gehäuses 2 ermöglichen.

Der Schwimmer 5 ist in Richtung der Mittellängsachse 16 des Gehäuses 2 beweglich gelagert. Zur Axialführung und Drehfixierung des Schwimmers 5 ist in einem oberen Abschnitt von dessen Umfangsfläche wenigstens eine Axialnut 17 vorhanden, in welche eine Axialleiste (nicht gezeigt) an der Innenseite des unteren Gehäuseteils 6 eingreift. Die Oberseite 18 des Schwimmers 5 ist im wesentlichen planeben ausgebildet und erstreckt sich quer zur Mittellängsachse 19 des Schwimmers. Der Schwimmer 5 weist eine zentrale, sich in seine Unterseite öffnende Bohrung 20 auf, an deren Grund ein sich axial erstreckender zentraler Führungsstab 23 angeformt ist. Der Führungsstab 23 ragt in einen hohlzylinderförmigen Vorsprung 24 hinein, welcher sich von der Unterseite des Gehäuseteils 6 axial weg erstreckt. Der Vorsprung 24 ist von dem unteren Ende einer Schraubenfeder 25 umgriffen, welche sich mit ihren einen Ende an einer unteren Wand 26 des Gehäuseteils 6 und mit ihrem anderen Ende innerhalb der Bohrung 20 am Schwimmer 5 abstützt.

Der Gehäuseteil 6 ist oberseits von einer Querwand 27 begrenzt, welche von einer mit dem Anschlussstutzen 11 fluidisch verbundenen Entlüftungsöffnung 28 durchbrochen ist. Diese ist so in der Querwand 27 angeordnet, dass sie von der Mittellängsachse 16 des Gehäuses 2 durchsetzt ist. Die Entlüftungsöffnung 28 wird von einem an der Oberseite 18 des Schwimmers 5 fixierten Dichtelement 29 gesteuert. Das Dichtelement 29 ist eine flexible Membran beispielsweise aus einem polymeren Werkstoff und weist einen Dichtbereich 30 auf, der so bemessen ist, dass er die Entlüftungsöffnung 28 vollständig überdeckt. Die Entlüftungsöffnung 28 ist von einem aus der Unterseite der Querwand 27 axial vorstehenden Dichtsitz 33 umgrenzt. An den Dichtbereich 30 ist ein Fixierabschnitt 34 angeformt, mit dem das Dichtelement 29 am Schwimmer 5 an einer Fixierstelle 35 fixiert ist. Diese befindet sich - in der Draufsicht in Richtung der Mittellängsachse 19 des Schwimmers 5 gesehen - radial außerhalb der Entlüftungsöffnung 28, ist somit exzentrisch hinsichtlich der Mittellängsachse 19 des Schwimmers 5 angeordnet.

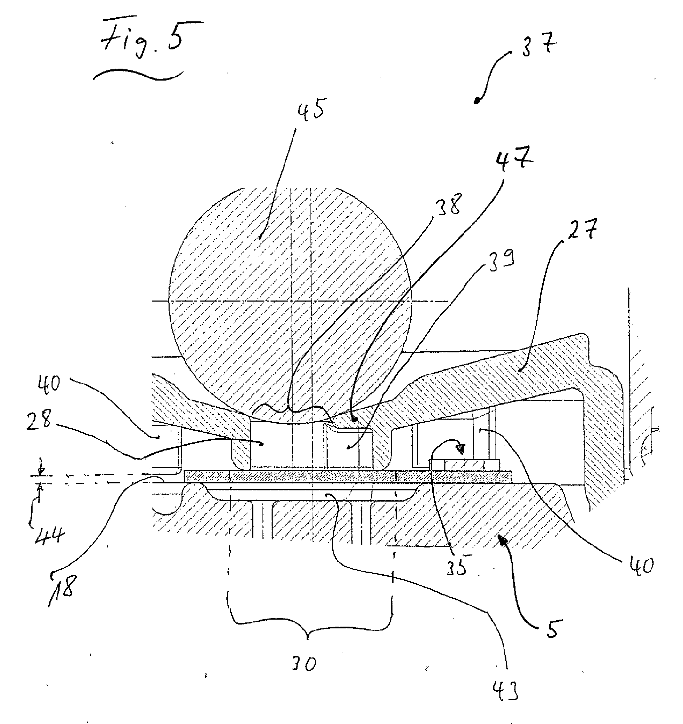

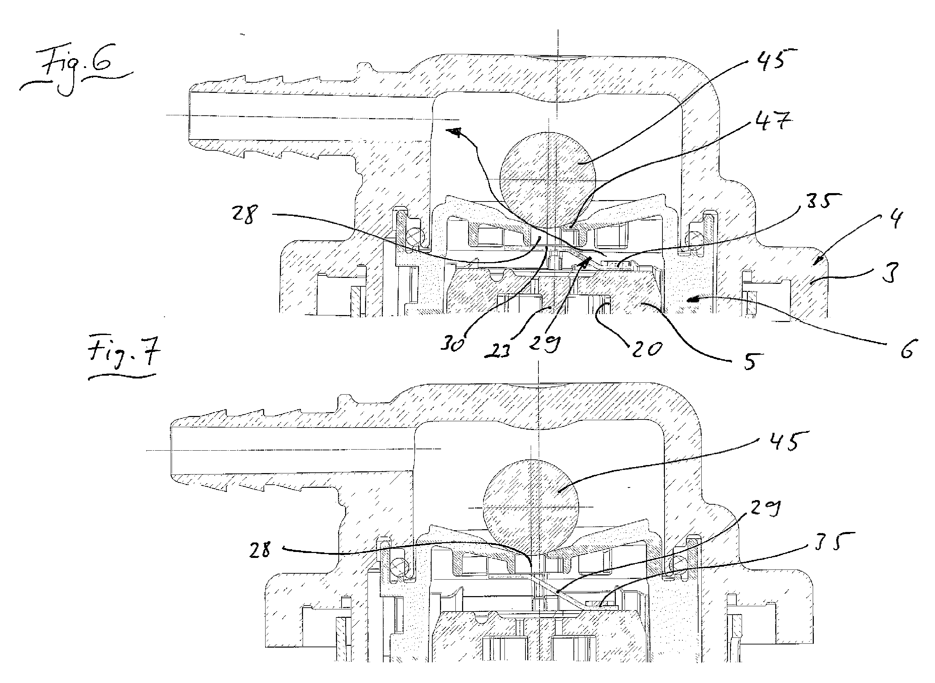

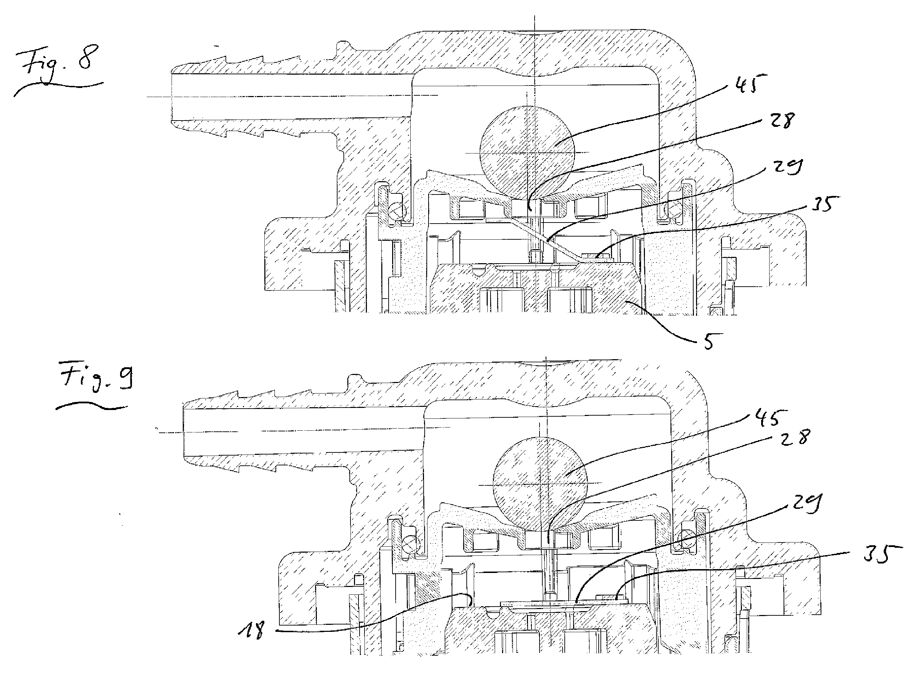

Die Entlüftungsöffnung 28 hat eine von der Kreisform abweichende Öffnungskontur. Um das Wiederöffnen zu erleichtern, d.h. um die Kräfte zu verringern, die am Beginn des Öffnungsvorgangs (Fig. 5, 6) zum Abziehen des Dichtelements 29 vom Dichtsitz 33 der Entlüftungsöffnung 28 erforderlich sind, ist ein sich von der Fixierstelle 35 weg erstreckender Endabschnitt 39 beispielsweise keil- oder schlitzförmig verengt, wobei sich seine lichte Breite 36 auf als ein sich davon wegerstreckender Öffnungsabschnitt. Die lichte Breite 36 ist dabei quer zu einer gedachten Mittelebene 37 gemessen, welche die Fixierstelle 35 mittig schneidet und welche die Mittellängsachse 16 des Schwimmers 5 beinhaltet. Die Entlüftungsöffnung 28 ist aufgrund dieser Ausgestaltung hinsichtlich einer sich rechtwinklig zu der gedachten Mittelebene 37 erstreckenden und die Mittellängsachse 16 des Schwimmers 5 enthaltenden Ebene 41 nicht spiegelsymmetrisch. Der sich an den verengten Endabschnitt 39 anschließende restliche Öffnungsbereich 38 kann letztlich beliebig gestaltet sein, sofern sich seine lichte Breite 36 zumindest in einem sich an den verengten Endabschnitt 39 anschließenden, sich z.B. bis zur Mittellängsachse 19 des Schwimmers 5 erstreckender Längsabschnitt 42 vergrößert, so dass, nachdem das Dichtelement 29 von dem verengten Endabschnitt 39 abgezogen ist, möglichst schnell der restliche Öffnungsbereich 38 freigegeben und dadurch ein hoher Gasdurchsatz gewährleistet wird (Fig. 6-9).

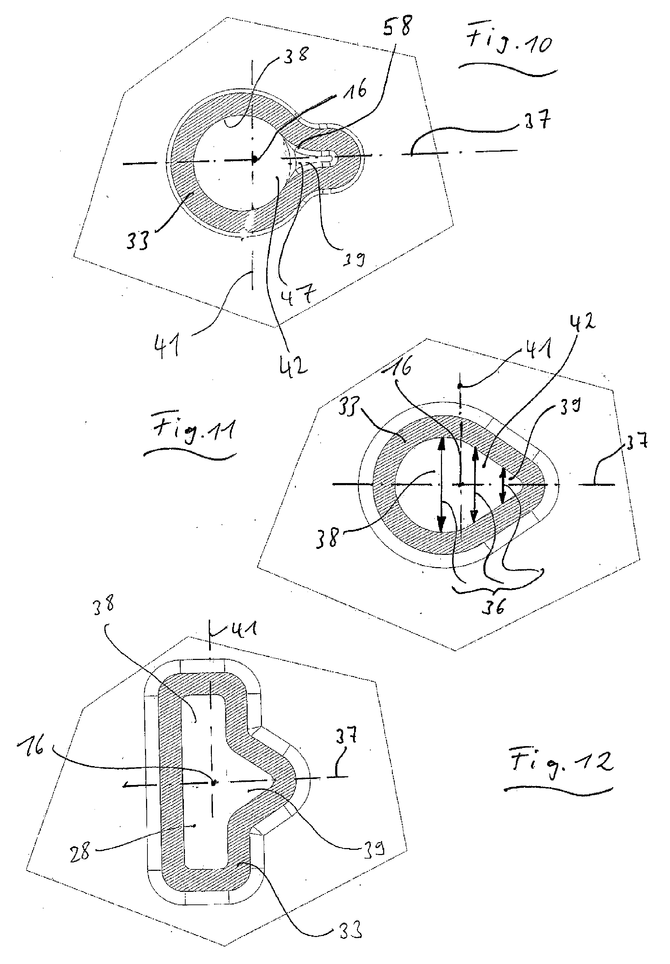

Der verengte Endabschnitt 39 kann - in der Draufsicht entsprechend Fig. 11 und 12 gesehen - schlitzförmig oder in Form eines sich zur Fixierstelle hin verjüngenden Keils ausgebildet sein. Die in Fig. 10 gezeigte Entlüftungsöffnung 28 weist etwa eine Tropfenform auf, wobei der verengte Endabschnitt 39 schlitzförmig ist und mit einem abgerundeten Randbereich 58 in den restlichen Öffnungsbereich 38 übergeht, der im wesentlichen kreisförmig ist. Bei der in Fig. 11 gezeigten Entlüftungsöffnung 28 ist der verengte Endabschnitt 39 keilförmig. Die Keilform setzt sich in den restlichen Öffnungsbereich 38 kontinuierlich fort, d.h. die lichte Breite 36 nimmt mit zunehmender Entfernung zur Fixierstelle stetig zu bis schließlich der Rand der Entlüftungsöffnung 28 eine Kreisbogenform annimmt. Be2 der in Fig. 11 gezeigten Entlüftungsöffnung 28 ist der verengte Endabschnitt 39 ebenfalls keilförmig, wobei aber der restliche Öffnungsbereich ungefähr die Form eines Rechtecks aufweist, dessen Längsseiten sich quer zur der gedachten Mittelebene 37 erstrecken.

In Fig. 4 ist das Entlüftungsventil in geschlossenem Zustand gezeigt. Der Dichtbereich 30 des Dichtelements 29 liegt dabei vollständig am Dichtsitz 33 an, so dass die Entlüftungsöffnung 28 verschlossen ist. An der Unterseite der Querwand 27 sind axial vorspringende Fortsätze 40 angeformt, welche mit der Oberseite 18 des Schwimmers 5 zusammenwirken und einen Endanschlag in der Schließstellung des Schwimmers 5 bilden. In der Oberseite 18 des Schwimmers ist unterhalb des Dichtbereiches 30 des Dichtelements 29 eine Ausnehmung 43 vorhanden. In diese wird das Dichtelement 29 beziehungsweise dessen Dichtbereich 30, ausgehend von der in Fig. 5 gezeigten Situation, um die Strecke 44 hineinbewegt, wenn der Schwimmer mit seiner Oberseite 18 an den Fortsätzen 40 anliegt.

Ausgehend von der in Fig. 4 und 5 gezeigten Situation kann das Entlüftungsventil nur dann öffnen, wenn der Druck im Innenraum 9 eines Kraftstofftanks soweit absinkt, dass die Gewichtskraft des Schwimmers 5 ausreicht, um das Dichtelement vom verengten Endabschnitt 39 abzuschälen. Da dieser Abschnitt insbesondere an seinem der Fixierstelle 35 nächstliegendem Ende nur eine geringe lichte Breite 36 aufweist, reicht schon ein Bruchteil der Gesamtgewichtskraft des Schwimmers 5 aus, um das Dichtelement 39 vom Dichtsitz wegzubewegen (Fig. 6). Über den Endabschnitt 39 kann nun Gas durch die Entlüftungsöffnung 28 nach außen strömen und der Druck sich im Tankinnenraum 9 abbauen. Mit zunehmendem Druckabbau verringert sich die auf den gesamten Dichtbereich 30 einwirkende Druckkraft, so dass das Dichtelement 29 nun schnell von dem sich nach unten bewegenden Schwimmer 5 vom Dichtsitz 33 abgezogen wird, bis schließlich die Entlüftungsöffnung 28 vollständig geöffnet ist und schließlich der Schwimmer soweit abgesunken ist, dass das Dichtelement vollständig vom Dichtsitz 33 entfernt ist und flach auf der Oberseite des Schwimmers aufliegt (Fig. 6 - 9).

Das in den Zeichnungen dargestellte Ventil weist eine Druckhaltefunktion auf. Zur Gewährleistung der Druckhaltefunktion ist eine Schließkugel 45 vorhanden. Die Oberseite der Querwand 27 weist eine trichterförmige, die Schließkugel 45 haltende Vertiefung 46 auf, an deren tiefster Stelle die Entlüftungsöffnung 28 angeordnet ist. Aus der Oberseite der Querwand 27 stehen mehrere in Umfangsrichtung beabstandete etwa radial verlaufende Rippen 21 vor, welche mit Radialabstand vor der Entlüftungsöffnung 28 enden. Anders als die Öffnungskontur der Entlüftungsöffnung auf der dem Schwimmer 5 zugewandten Unterseite der Querwand 27 weist sie an der Oberseite der Querwand 27 eine kreisrunde Öffnungskontur auf. An dieser Öffnungskontur liegt die Schließkugel 45 dichtend an. Das Gewicht der Schließkugel 45 ist so bemessen, dass im Tankinnenraum 9 stets ein gewisser Minimaldruck vorhanden ist. Der Minimaldruck dient dazu, wie weiter oben schon beschrieben, gegen Ende eines Betankungsvorgangs das Abschalten einer Zapfpistole zu ermöglichen. Im Falle einer Öffnungskontur entsprechend Fig. 10 oder Fig. 11 weist die Entlüftungsöffnung 28 einen im wesentlichen kreiszylinderförmigen, die Querwand 27 axial durchsetzenden Öffnungsbereich 38 mit kreisbogenförmigem Rand auf, wobei sich dieser Bereich in Richtung zur Fixierstelle 35 hin zum schlitzförmigen oder sich keilförmig verjüngenden Endabschnitt 39 verengt. Der Endabschnitt 39 ist oberseits durch einen in die Entlüftungsöffnung 28 hinein ragenden Wandbereich 47 der Querwand 27 verschlossen.

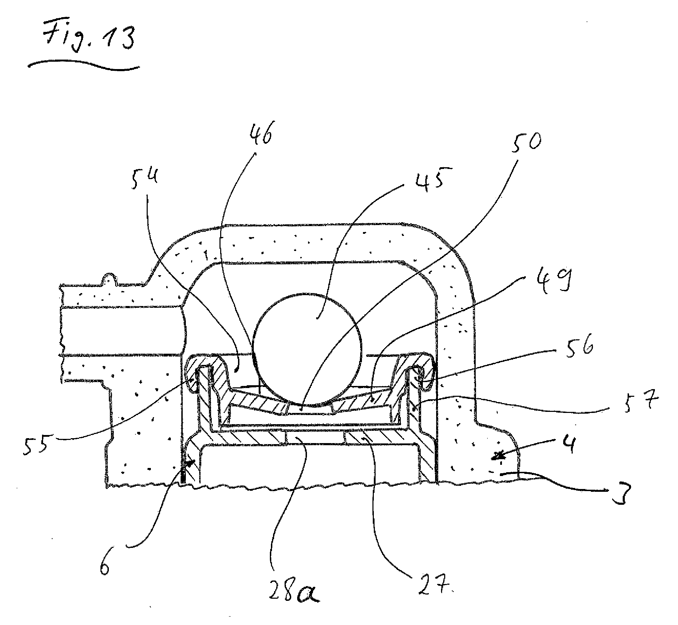

In Fig. 13 ist ein Ausführungsbeispiel eines Entlüftungsventils mit Druckhaltefunktion gezeigt, bei dem zwar ebenfalls in einer Querwand 27 eine Entlüftungsöffnung 28a vorhanden ist. Deren mit dem Dichtelement 29 (in Fig. 13 nicht gezeigt) zusammen wirkende Öffnungskontur mit einer Ausgestaltung der oben genannten Art setzt sich aber in die Oberseite der Querwand 27 fort. Die Entlüftungsöffnung 28a kann somit von einer Verschlusskugel 45 zur Aufrechterhaltung einer Druckhaltefunktion nicht verschlossen werden. Dazu ist oberhalb der Querwand 27 eine zweite Querwand 49 vorhanden, deren Oberseite eine trichterförmige Vertiefung 46 aufweist, und die von einer zentralen Entlüftungsöffnung 50 mit kreisrunder Öffnungskontur durchsetzt ist, welche mit der Verschlusskugel 45 zusammenwirkt. Während bei der weiter oben beschriebenen Ausführungsform das gesamte Gehäuseunterteil, zumindest dessen Querwand 27 und die sich axial erstreckenden Seitenwände einstückig im Spritzgussverfahren hergestellt werden können, ist die Querwand 49 bei dem Ausführungsbeispiel nach Fig. 13 ein separates Teil, das mit dem Gehäuseunterteil 6a Gas- bzw. Druckdicht verbunden werden muss. Zu diesem Zweck ist an den Rand der Querwand 49 eine radial nach oben abstehende Schürze 54 mit nach unten umgebördelten Rand 55 angeformt. Der Rand 55 ist dabei so weit radial von der Schürze 54 entfernt, dass eine Nut 56 gebildet ist, in welche ein an der Oberseite der Querwand 27 angeformter Kragen 57 gas- bzw. druckdicht einsetzbar ist.

## Patentansprüche

1. Entlüftungsventil für den Kraftstofftank eines Kraftfahrzeugs, mit einem eine Entlüftungsöffnung (28) aufweisenden Gehäuse (2), einem im Gehäuse in Richtung von dessen Mittellängsachse (16) beweglich gelagerten Schwimmer (5) und ein am Schwimmer gehaltenes Dichtelement (29), welches an einer - in der Draufsicht in Richtung der Mittellängsachse (16) des Gehäuses (2) gesehen - außerhalb der Entlüftungsöffnung (28,28a) angeordneten Fixierstelle (35) am Schwimmer (5) fixiert ist, wobei die Entlüftungsöffnung (28,28a) eine von der Kreisform abweichende Öffnungskontur und einen sich von der Fixierstelle (35) weg erstreckenden Endabschnitt (39) aufweist, dessen lichte Breite (36) mit zunehmenden Abstand von der Fixierstelle (35) zunimmt, wobei die lichte Breite (36) quer zu einer gedachten Mittelebene (37) gemessen ist, welche die Fixierstelle (35) mittig schneidet und die Mittellängsachse (19) des Schwimmers (5) beinhaltet.

2. Entlüftungsventil nach Anspruch 1,
**dadurch gekennzeichnet,**
**dass** eine weitere Entlüftungsöffnung (50) vorhanden ist, die von einem schwerkraftbedingt auf ihr ruhenden Schließkörper verschlossen ist und mit der durch den Schwimmer (5) gesteuerten Entlüftungsöffnung (28a) fluidisch verbunden ist.

3. Entlüftungsventil nach Anspruch 2,
**dadurch gekennzeichnet,**
**dass** als Schließkörper eine Schließkugel (45) vorhanden ist und die Entlüftungsöffnung (50) eine kreisförmige Öffnungskontur aufweist.

4. Entlüftungsventil nach Anspruch 2 oder 3,
**dadurch gekennzeichnet,**
**dass** die beiden Entlüftungsöffnungen (28a,50) jeweils an einer separaten Querwand (27,49) des Gehäuses (2) angeordnet sind.

5. Entlüftungsventil nach Anspruch 1,
**dadurch gekennzeichnet,**
**dass** die Entlüftungsöffnung (28) eine Querwand (27) des Gehäuses durchsetzt, wobei sie in die vom Schwimmer (5) abgewandte Oberseite der Querwand ausmündet und oberseits von einem schwerkraftbedingt auf ihr ruhenden Schließkörper verschlossen ist.

6. Entlüftungsventil nach Anspruch 5,
**dadurch gekennzeichnet,**
**dass** die Entlüftungsöffnung (28) mit einer kreisrunden Öffnungskontur in der Oberseite der Querwand (27) ausmündet und als Schließkörper eine Schließkugel (45) vorhanden ist.

7. Entlüftungsventil nach einem der vorhergehenden Ansprüche,
**dadurch gekennzeichnet,**
**dass** die von der Kreisform abweichende Öffnungskontur der Belüftungsöffnung (28,28a) spiegelsymmetrisch hinsichtlich der Mittelebene (37) ausgestaltet ist.
